# DEMANDE DE BREVET EUROPEEN

(11) **EP 1 065 625 A1**
(43) Date de publication de la demande: **03.01.2001**
(21) Numéro de dépôt: 99114803.2
(22) Date de dépôt: 28.07.1999
(51) Int. Cl.: G06K 19/07, G06K 7/00, G07C 9/00

(54) **Système de détection d'individus ou d'objets à transpondeur**

(30) Priorité: 02.07.1999 EP 99112824
(71) Demandeur: EM Microelectronic-Marin SA, 2074 Marin (CH)
(72) Inventeur: Degrauwe, Marc, 2025 Chez-le-Bart (CH)
(74) Mandataire: Ravenel, Thierry Gérard Louis

(57) **Abrégé**

Système de détection d'individus (8) ou d'objets dans un espace (10) délimité présentant au moins une entrée (6, 7). Ce système comprend au moins un émetteur (4, 5) placé à cette entrée et associé à des unités ou cartes électroniques (16, 36) portables formant des récepteurs-émetteurs ou récepteurs-répondeurs. Ces unités électroniques sont agencées pour recevoir par l'émetteur des premières données à basse fréquence et à courte distance et pour fournir des deuxièmes données à haute fréquence à un récepteur ou lecteur (12, 13) situé à l'intérieur dudit espace délimité. Chaque unité électronique a des premiers moyens (18) de réception fonctionnant à basse fréquence, susceptibles d'être en mode "écoute" en permanence ou quasi-permanence, et des deuxièmes moyens (20) pour fournir les deuxièmes données qui sont activées seulement durant un ou des moments(s) limité(s) pendant lesquels intervient une communication à haute fréquence et à moyenne distance. Les deuxièmes données sont fournies avec un certain retard relativement à la réception des premières données de manière à permettre la détection d'individus ou d'objets présents dans ledit espace après une certaine période suivant leur passage par ladite entrée.

## Description

La présente invention concerne la détection d'individus ou d'objets dans un espace délimité présentant au moins une entrée. Plus particulièrement, la présente invention concerne la détection de la présence d'individus ou d'objets dans un espace délimité pendant une période temporelle ultérieure au passage par l'entrée de ces individus ou objets. Par entrée, il faut comprendre de manière large toute porte ou chemin de passage donnant accès à l'espace délimité en question. A titre d'exemple, il est prévu de détecter la présence d'individus lors d'un trajet dans un transport public ou lors d'un événement sportif ou culturel ayant lieu dans un endroit délimité.

Dans le cas de la présente invention, il est prévu de détecter la présence d'individus ou d'objets au moyen de cartes ou d'unités électroniques portables ayant des moyens pour recevoir des premières données sous forme de signaux électromagnétiques et des moyens pour fournir des deuxièmes données également sous forme de signaux électromagnétiques. Il est prévu de munir les individus ou objets de telles unités électroniques portables.

Pour s'assurer de la présence d'un individu ou d'un objet dans un espace délimité à un moment donné, il n'est souvent pas suffisant de détecter son passage à proximité d'une entrée à cet espace. On remarquera que certains individus ou objets situés momentanément à proximité d'une entrée peuvent entrer en communication avec un émetteur ou émetteur-récepteur susmentionné situé à cette entrée qui, en l'absence d'autres moyens appropriés, considérera que l'individu ou l'objet en question est entré dans ledit espace. Cette conclusion peut s'avérer erronée étant donné qu'un individu ou un objet peut être momentanément à proximité d'une entrée d'un espace limité sans y pénétrer. De plus, il est également possible qu'une personne pénètre pour un instant et ressorte avant un événement déterminant, par exemple le début d'un film ou la fermeture des portes d'un moyen de transport public. Selon l'agencement de l'émetteur ou émetteur-récepteur prévu à l'entrée, il n'est pas possible de garantir que la sortie de l'individu ou de l'objet avant ledit événement déterminant soit correctement enregistré et ainsi une incertitude demeure quant à sa présence dans ledit espace limité après cet événement déterminant.

De manière générale, l'invention se propose de palier les inconvénients susmentionnés en prévoyant de disposer à l'intérieur de l'espace délimité un ou plusieurs récepteurs ou lecteurs susceptibles d'entrer en communication avec les unités électroniques portables présentes dans cet espace après un événement déterminant, par exemple entre deux arrêts ou gares dans le cas d'un transport public.

Toutefois, un problème important demeure étant donné que la communication à moyenne distance, en particulier de l'ordre de grandeur des mètres ou de la dizaine de mètres, n'est pratiquement réalisable qu'à une relativement haute fréquence, par exemple de l'ordre des centaines de MHz. Or, pour maintenir le circuit électronique de réception d'une unité électronique portable en mode d'écoute, c'est-à-dire dans un état propre à recevoir un signal électromagnétique codé, la consommation en énergie est relativement importante et nécessite une source d'énergie de relativement grande capacité, laquelle est difficilement intégrable dans une unité électronique destinée à être portée notamment par un individu. Etant donné que pour de nombreuses applications, il est nécessaire que le récepteur de l'unité électronique portable soit apte à recevoir instantanément et en permanence un signal codé, le fait de prévoir des récepteurs ou émetteurs-récepteurs dans ledit espace délimité n'est pas suffisant en tant que tel pour un système fonctionnel lorsque l'espace délimité en question a au moins une dimension de l'ordre du mètre ou de la dizaine de mètres.

La présente invention a donc comme but particulier de résoudre le problème mentionné ci-avant en proposant un procédé de détection d'un individu ou d'un objet dans un espace délimité défini dans la revendication indépendante 1 ci-jointe.

La présente invention a également pour objet un système de détection d'individus ou d'objets dans un espace délimité présentant au moins une entrée tel que défini à la revendication indépendante 5 et une carte ou unité électronique formant un récepteur-émetteur ou récepteur-répondeur telle que définie à la revendication indépendante 14.

Grâce aux caractéristiques du procédé de détection selon l'invention, et aux caractéristiques correspondantes du système de détection selon l'invention permettant la mise en oeuvre dudit procédé de détection, ainsi que des caractéristiques correspondantes de l'unité électronique selon l'invention associée audit système de détection, les moyens de réception agencés dans ladite unité électronique restent en permanence ou quasi-permanence dans un mode d'écoute, tout au moins durant des périodes relativement longues dans le cas où des moyens d'interruption sont prévus, tout en consommant relativement peu étant donné qu'ils sont agencés pour fonctionner à basse fréquence. Cet agencement avantageux est rendu possible par le fait que l'unité électronique portable reçoit des premières données à basse fréquence lors du passage par une entrée à l'espace délimité qui permet une communication à courte distance et ainsi à basse fréquence, et par le fait que la partie électronique de ces unités électroniques portables fonctionnant à haute fréquence est activée pour l'essentiel seulement durant un ou plusieurs moment(s) limité(s) à l'intérieur desquels il est prévu une communication à haute fréquence, à une certaine fréquence ou dans une plage de fréquence, avec le(s) récepteur(s) ou lecteur(s) prévu(s) à l'intérieur dudit espace.

Dans un mode de réalisation préféré, lesdites premières données fournies à basse fréquence comprennent un signal de retardement définissant un intervalle de temps entre la réception de ces premières données et l'activation des circuits électroniques haute fréquence, notamment des moyens pour fournir les deuxièmes données au récepteur ou lecteur susmentionné. De ce fait, un événement déterminant peut avoir lieu entre la réception des premières données par l'unité électronique portable et la communication à haute fréquence, durant un moment limité d'activation, entre cette unité et un récepteur ou lecteur prévu à l'intérieur dudit espace. Cet événement déterminant est par exemple la fermeture des portes d'un moyen de transport public précédant son départ.

La présente invention permet donc de détecter avec une grande efficacité la présence d'individus ou d'objets dans un espace délimité et durant une période temporelle donnée tout en minimisant la consommation d'énergie nécessaire pour maintenir l'unité électronique portable associée à un individu ou un objet dans un mode d'écoute permettant une communication instantanée et permanente, nécessaire à une communication à un instant non déterminé avec un émetteur ou émetteur-récepteur de détection.

Des modes de réalisation particuliers et d'autres avantages de la présente invention ressortiront à la lecture de la description suivante faite en référence aux dessins annexés donnés à titre d'exemple nullement limitatif, et dans lesquels :
- la figure 1 représente un wagon de train équipé d'un premier mode de réalisation d'un système de détection selon la présente invention;
- la figure 2 représente schématiquement un premier mode de réalisation d'un récepteur-émetteur ou récepteur-répondeur formant une unité électronique portable selon l'invention associé au système de la figure 1;
- la figure 3 représente schématiquement une vue de dessus d'un compartiment de métro ou de bus équipé d'un deuxième mode de réalisation d'un système de détection selon la présente invention;
- la figure 4 représente un deuxième mode de réalisation d'une unité électronique portable selon l'invention associée au système de la figure 3; et
- la figure 5 est une vue similaire à la figure 3 et représente une variante perfectionnée du système de détection selon l'invention.

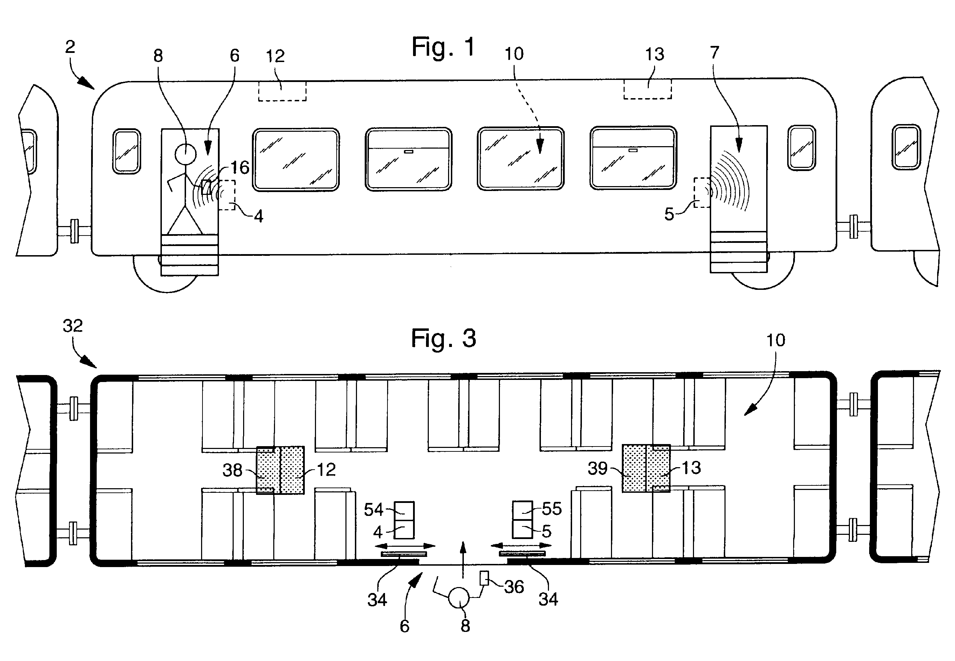

Le système et le procédé de détection selon l'invention seront décrits ci-après pour une application concernant le transport de personnes, notamment par le train (figure 1) et par un métro ou bus (figure 3). Bien évidemment tout autre moyen de transport, notamment le transport routier ou aérien peut être envisagé pour des individus ou des objets. On notera ici que le domaine d'application de la présente invention ne se limite pas au transport mais concerne aussi des espaces limités fixes, notamment des salles d'attente dans des aéroports, et le suivi de l'évolution d'un objet ou d'un individu dans un immeuble privé ou public, notamment une entreprise.

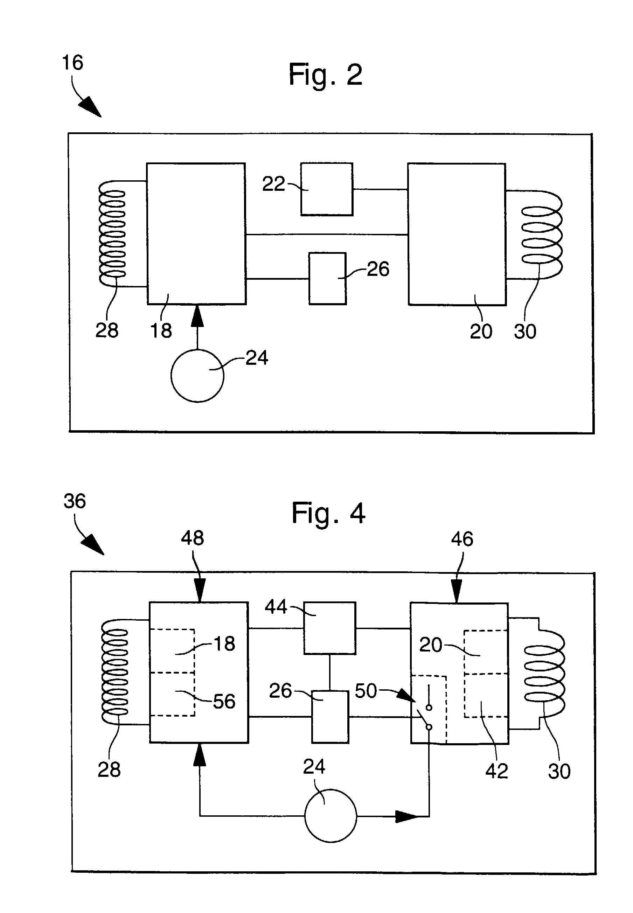

A l'aide des figures 1 et 2, on décrira ci-après un premier mode de réalisation d'un système de détection selon l'invention permettant une première mise en oeuvre du procédé selon l'invention. Le wagon 2 est équipé de deux émetteurs 4 et 5 situé respectivement aux deux entrées 6 et 7 permettant un accès à l'espace intérieur 10 du wagon 2. Selon la variante représentée, il est prévu deux récepteurs ou deux lecteurs 12 et 13 placés à l'intérieur de ce wagon.

Par récepteur, on comprend des moyens en mode écoute agencés pour recevoir des signaux codés à une certaine fréquence ou dans une plage de fréquence donnée. Par lecteur, on comprend en outre que ce dernier est agencé pour envoyer des signaux d'interrogation servant à gérer la communication avec un répondeur.

On notera de suite que pour les besoins de la présente invention, dans le cas où une seule entrée est prévue pour l'espace délimité surveillé, un seul émetteur et un seul récepteur ou lecteur placé dans une position centrale à l'intérieur de l'espace intérieur 10 peuvent suffire. Toutefois, selon les dimensions de l'espace délimité surveillé, l'utilisation de plusieurs récepteurs ou lecteurs peut s'avérer préférable.

L'émetteur 4 comprend des moyens d'émission à basse fréquence, notamment de l'ordre d'une centaine de kHz, et agencés pour fournir des premières données à une carte ou unité électronique portable 16 formant un récepteur-émetteur ou récepteur-répondeur représenté schématiquement à la figure 2. L'émetteur 4 ou 5 fournit ainsi des premières données à toute unité électronique 16 qui entre dans son champ de communication. Selon l'invention, il est prévu que les moyens de réception basse fréquence 18 de cette unité 16 sont en permanence ou quasi permanence dans un mode "écoute", en tout cas pendant les périodes de fonctionnement prévues pour l'unité électronique 16. A cet effet, le circuit de réception basse fréquence 18 est alimenté par une source d'énergie 24 agencée dans l'unité 16. Cette unité comprend également un circuit émetteur ou répondeur 20 à haute fréquence, notamment de l'ordre des centaines de MHz ou plus, pour fournir des deuxièmes données au récepteur ou lecteur 12 ou 13 à un instant ultérieur au passage par l'entrée 6 de l'individu 8 portant l'unité électronique 16. Ces deuxièmes données sont transmises à haute fréquence, soit à une fréquence donnée, soit dans une plage de fréquence déterminée. En effet, la fréquence de communication peut varier d'un message à l'autre et également lors de la transmission d'un même message selon le procédé connu de communication à spectre étendu (de l'anglais "spread spectrum").

Les deuxièmes données sont stockées dans une mémoire 22 reliée au circuit 20. Dans une première variante, l'émission des deuxièmes données par le circuit 20 est effectuée à l'aide de la source d'énergie interne 24. Dans ce cas, un simple récepteur 12 ou 13 suffit au présent système de détection. Toutefois, dans une variante préférée, les données fournies par le circuit 20 sont transmises par une modulation d'un champ d'excitation fourni par le lecteur 12 ou 13. Dans une variante de ce mode de réalisation préféré, une partie de l'énergie du champ d'excitation peut également être fournie au circuit 20 pour assurer son alimentation propre et il est aussi envisageable d'utiliser le champ d'excitation pour recharger la source d'énergie 24.

Selon l'invention, il est prévu d'activer le circuit haute fréquence 20 seulement dans un ou des moment(s) limité(s) intervenant après la réception desdites premières données par le circuit récepteur basse fréquence 18. La réception de ces premières données détermine au moins le début d'un premier moment limité d'activation du circuit 20. Lesdites deuxièmes données sont fournies avec un certain retard relativement à la réception par l'unité 16 desdites premières données, car il est prévu de détecter la présence d'un individu ou d'un objet à l'intérieur d'un espace délimité après une certaine période suivant son passage par l'entrée, notamment seulement après la fermeture des entrées 6 et 7. Dans une variante préférée, il est prévu d'activer le circuit 20 seulement après un certain premier intervalle de temps suivant la réception desdites premières données et déterminé par un signal de retardement contenu dans ces premières données. A cet effet, il est prévu une base de temps 26 servant à compter un intervalle de temps ou à décompter cet intervalle pour déterminer le début d'un premier moment limité d'activation du circuit 20. Les récepteurs ou lecteurs 12 et 13 sont activés au moins pendant ledit un ou lesdits moment(s) limité(s).

L'unité électronique 16 comprend deux antennes 28 et 30 associées respectivement aux deux circuits 18 et 20 et adaptées respectivement à une communication à basse fréquence et à haute fréquence.

A l'aide des figures 3 et 4, on décrira ci-après un deuxième mode de réalisation d'un système de détection selon l'invention permettant une deuxième mise en oeuvre du procédé selon l'invention.

Les références déjà décrites précédemment dans le cadre des figures 1 et 2 ne seront pas à nouveau décrites ici en détail. Le compartiment 32 d'un métro ou d'un bus définit un espace 10 à l'intérieur duquel un individu 8 peut entrer par une seule entrée 6 prévue. Cette entrée est fermée par une porte coulissante 34. L'individu 8 entre dans le compartiment 32 muni d'une carte ou unité électronique 36 représentée schématiquement à la figure 4.

Selon ce deuxième mode de réalisation, il est prévu dans l'espace 10 d'agencer en plus des deux récepteurs ou lecteurs 12 et 13 deux émetteurs à haute fréquence 38 et 39. De préférence, la fréquence de communication ces émetteurs est la même que celle des récepteurs ou lecteurs susmentionnés auxquels ils peuvent être respectivement associés pour former deux unités de communication à haute fréquence.

Dans une variante préférée de la deuxième mise en oeuvre du procédé, il est prévu que les émetteurs 38 et 39 envoient aux unités électroniques 36 présentes dans l'espace 10 au moins un signal de réactivation déterminant un nouvel intervalle de temps après lequel le circuit de réception à haute fréquence 42 doit à nouveau être activé durant un moment limité ultérieur au moment limité pendant lequel ce signal de réactivation est reçu. Afin de pouvoir recevoir des troisièmes données contenant au moins ledit signal de réactivation, le circuit 42 est également activé pendant chaque moment limité où le circuit 22 est activé.

Le procédé décrit ci-avant permet notamment de contrôler la présence d'individus munis de cartes ou unités électroniques 36 dans l'espace 10 à des instants successifs séparés temporellement. Dans le cas d'un train ou d'un autre transport public, on détectera la présence des individus entre chaque arrêt successif. Ce procédé est avantageux par le fait qu'il engendre seulement une alimentation de la partie haute fréquence 46 de l'unité 16 pendant un seul moment limité. Dans le cas où aucune communication n'est établie pendant ce moment limité, la partie haute fréquence 46, en particulier le circuit 20, ne sera pas à nouveau activée. Ainsi, on garantit une économie d'énergie maximale.

Toutefois, dans une variante de réalisation, il est possible de prévoir que les premières données fournies à l'entrée à basse fréquence détermine plusieurs intervalles de temps différents correspondant à plusieurs moments limités durant lesquels le circuit 20 doit être activé. Cette solution présente le désavantage de figer les instants de communication à haute fréquence. Ainsi, en cas de retard ou de perturbation du trafic, les moments de détection de la présence d'individus pourraient ne pas être synchronisés aux différents arrêts successifs prévus.

Selon une variante de mise en oeuvre du procédé selon l'invention, les émetteurs 38 et 39 servent également à un protocole d'anti-collision pour la communication entre l'ensemble des cartes ou unités 36 présentes dans l'espace 10 et les récepteurs ou lecteurs 12 ou 13. L'homme du métier connaît différents protocoles d'anti-collision, notamment certains où un signal de fin de communication est envoyé à chaque carte ou unité 36 détectée correctement.

L'unité 36 comprend en outre un circuit électronique de traitement et une mémoire formant l'unité 44. Cette unité 44 est reliée à la partie haute fréquence 46 et peut également être reliée à la partie basse fréquence 48 de cette unité 36. De plus, l'unité 44 est reliée à la base de temps 26 pour gérer la mesure des divers intervalles de temps intervenant dans le procédé selon l'invention.

La source d'énergie ou accumulateur 24 alimente la partie 48 et également la partie 46 dans lesdits moments limités pendant lesquels des communications à haute fréquence interviennent. Pour schématiser le fait que la partie haute fréquence 46 est activée essentiellement pendant des moments limités déterminés, la source 24 est reliée à un interrupteur 50 commandé par la base de temps 26. La commande de l'interrupteur 50 peut également se faire via l'unité 44.

Selon une variante perfectionnée du deuxième mode de mise en oeuvre du système de l'invention, deux récepteurs ou lecteurs 54 et 55 à basse fréquence sont agencés à l'entrée 6. De préférence, ces récepteurs ou lecteurs forment respectivement deux unités de communication à basse fréquence avec les émetteurs 4 et 5. On notera que les émetteurs 4 et 5 à la figure 3 sont placés de part et d'autre de l'entrée 6 alors qu'ils étaient respectivement placés à deux entrées à la figure 1. Les récepteurs ou lecteurs 54 et 55 servent notamment à la réception de codes d'identification permettant d'identifier les individus ou objets entrant dans l'espace 10. A cet effet, les unités électroniques 36 comprennent un circuit émetteur à basse fréquence 56 agencé dans la partie 48 reliée à l'unité 44 dans laquelle est inscrit ce code d'identification. Ceci peut servir de moyens de sécurité et également à gérer le protocole de détection des unités 36 présentes dans l'espace 10. En particulier, dans le cas de la non-détection d'un des codes d'identification, une nouvelle interrogation peut être prévue soit immédiatement, soit après un court intervalle de temps afin de s'assurer que l'individu ou l'objet porteur de l'unité 36 correspondant à ce code d'identification est bien absente de l'espace 10.

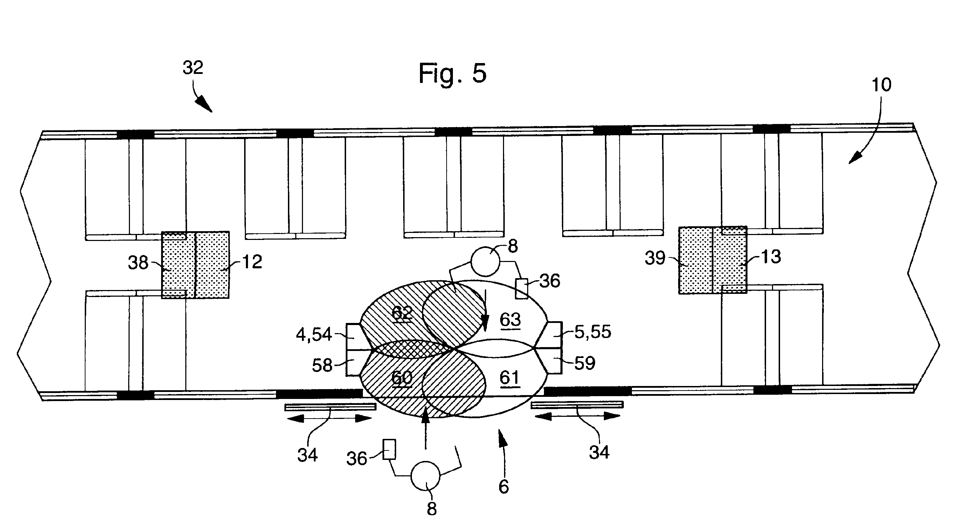

Finalement, à la figure 5 est représentée une autre variante perfectionnée du système de détection selon la présente invention. Les références déjà décrites à l'aide de la figure 3 ne seront pas à nouveau décrites ici. Cette variante se distingue essentiellement de celle de la figure 3 par le fait qu'il est prévu en plus des émetteurs-récepteurs 4,54 et 5,55 deux lecteurs ou émetteurs-récepteurs 58 et 59. Ces derniers présentent des régions de communication 60 et 61 partiellement séparées spatialement des régions de communication 62 et 63 des émetteurs-récepteurs 4,54 et 5,55.

Cette variante permet de détecter aisément le sens de passage à l'entrée 6, c'est-à-dire de détecter une entrée ou une sortie d'un individu ou d'un objet. Ceci permet de renforcer la gestion de la détection à l'intérieur de l'espace 10 surveillé et permet également d'optimiser la consommation d'énergie des unités 36. Lors d'une entrée, les anciennes données temporelles pour l'activation de la partie haute fréquence 46 sont effacées et de nouvelles instructions sont enregistrées. Lors d'une sortie, on peut prévoir par exemple d'annuler les instructions restantes concernant des moments limités d'activation ultérieure de la partie 46. Ainsi, cette partie haute fréquence ne sera pas activée inutilement une fois l'individu ou l'objet sorti de l'espace 10.

Dans une variante proposée, les émetteurs-récepteurs 58 et 59 communiquent à basse fréquence, de préférence à la même fréquence que les émetteurs 4 et 5.

## Revendications

1. Procédé de détection d'un individu (8) ou d'un objet dans un espace délimité (10) présentant au moins une entrée (6, 7) par laquelle cet individu ou objet a accès à cet espace, ce procédé comprenant les étapes suivantes :
A) réception par une carte ou unité électronique (16;36) formant un récepteur-émetteur ou récepteur-répondeur, porté par ledit individu ou objet, de premières données fournies par un premier émetteur (4, 5), placé à ladite entrée, dans une première plage de fréquence, cette unité électronique comprenant des premiers moyens de réception (18) dans cette première plage de fréquence susceptibles d'être en mode "écoute" en permanence ou quasi-permanence;
B) activer des deuxièmes moyens (20), agencés dans ladite unité électronique, pour fournir des deuxièmes données durant un ou des moment(s) limité(s) dont au moins le début dudit un ou de l'un desdits moment(s) limité(s) est déterminé par lesdites premières données reçues par cette unité électronique, lesdites deuxièmes données étant fournies dans une deuxième plage de fréquence supérieure à ladite première plage de fréquence et étant reçues par au moins un premier récepteur ou lecteur (12, 13) placé dans ledit espace et qui est activé au moins pendant ledit un ou lesdits moment(s) limité(s), lesdites deuxièmes données étant fournies avec un retard relativement à la réception desdites premières données de manière à détecter si ledit individu ou objet est présent dans ledit espace après une certaine période suivant son passage par ladite entrée.

2. Procédé de détection selon la revendication 1, caractérisé en ce que lesdites premières données comprennent un signal de retardement déterminant un premier intervalle de temps entre la réception des premières données et ledit début dudit premier moment limité.

3. Procédé selon la revendication 1 ou 2, caractérisé en ce que, lorsque ledit premier récepteur ou lecteur reçoit de ladite unité électronique portable des deuxièmes données, un signal de réactivation est envoyé à ce récepteur ou lecteur par un deuxième émetteur (38, 39) placé dans ledit espace, ce signal de réactivation déterminant un intervalle de temps après lequel lesdits deuxièmes moyens sont à nouveau activés durant un moment limité ultérieur au moment limité pendant lequel ledit signal de réactivation est reçu, ladite unité électronique portable comprenant à cet effet des troisièmes moyens de réception (42) dans ladite deuxième plage de fréquence.

4. Procédé selon l'une des revendications précédentes, caractérisé en ce qu'il est prévu lors de l'étape A) qu'un deuxième récepteur ou lecteur (54, 55) placé à ladite entrée reçoive, lors du passage dudit individu ou objet par cette entrée, au moins un code d'identification fourni par ladite unité électronique qui comprend à cet effet des quatrièmes moyens (56) pour fournir des quatrièmes données à ce deuxième récepteur ou lecteur.

5. Système de détection d'individus ou d'objets dans un espace délimité (10) présentant au moins une entrée (6, 7) par laquelle des individus ou objets ont accès à cet espace, ce système comprenant au moins un premier émetteur (4, 5) placé à ladite entrée et associé à des cartes ou unités électroniques portables (16, 36) formant des récepteurs-émetteurs ou récepteurs-répondeurs, ces unités électroniques étant agencées pour recevoir des premières données par ledit premier émetteur et destinées à être portées par lesdits individus ou objets, ce système étant caractérisé en ce qu'il comprend en outre au moins un premier récepteur ou lecteur (12, 13) placé à l'intérieur dudit espace et agencé pour recevoir des deuxièmes données fournies par lesdites unités électroniques situées dans au moins une partie de cet espace, ledit premier émetteur émettant dans une première plage de fréquence et ledit premier récepteur ou lecteur recevant lesdites deuxièmes données dans une deuxième plage de fréquence supérieure à ladite première plage de fréquence, chaque unité électronique ayant des premiers moyens (18) pour recevoir lesdites premières données, susceptibles d'être en mode "écoute" en permanence ou quasi-permanence, et des deuxièmes moyens (20) pour fournir lesdites deuxièmes données qui sont activés seulement durant un ou des moment(s) limité(s) dont au moins le début dudit premier moment limité suivant le passage de cette unité électronique par ladite entrée est déterminé par lesdites premières données, lesdites deuxièmes données étant fournies avec un certain retard relativement à la réception desdites premières données de manière à détecter les individus présents dans ladite au moins une partie dudit espace après une certaine période suivant leur passage par ladite entrée.

6. Système selon la revendication 5, caractérisé en ce que lesdites premières données fournies par ledit premier émetteur (4, 5) auxdites unités électroniques lors de leur passage par ladite entrée comprennent un signal de retardement qui détermine un premier intervalle de temps entre la réception de ces premières données et le début dudit premier moment limité d'activation desdits deuxièmes moyens (20), lesdites unités électroniques comprenant une base de temps (26) permettant de compter ou décompter ledit premier intervalle de temps.

7. Système selon la revendication 5 ou 6, comprenant en outre un deuxième émetteur (38, 39) dans ladite deuxième plage de fréquence placé dans ledit espace limité et associé à des troisièmes moyens de réception (42) dans ladite deuxième plage de fréquence qui sont agencés dans lesdites unités électroniques, ce deuxième émetteur émettant des troisièmes données susceptibles d'être reçues par lesdites unités électroniques, situées dans au moins une partie dudit espace, pendant ledit un ou lesdits moment(s) limité(s).

8. Système selon la revendication 7, caractérisé en ce que lesdites troisièmes données reçues dans un quelconque desdits moments limités comprennent un signal de réactivation déterminant un intervalle de temps après lequel lesdits deuxièmes moyens sont à nouveau activés durant un moment limité ultérieur au moment limité pendant lequel ledit signal de réactivation est reçu.

9. Système selon la revendication 7 ou 8, caractérisé en ce qu'il est prévu un protocole d'anti-collision pour la transmission des deuxièmes données par les unités électroniques audit premier récepteur ou lecteur (12, 13), ce dernier étant associé auxdits deuxièmes émetteurs et lesdites troisièmes données servant au moins en partie à la mise en oeuvre dudit protocole d'anti-collision.

10. Système selon l'une des revendications 5 à 9, caractérisé en ce qu'il comprend un deuxième récepteur ou lecteur (54, 55) situé à ladite entrée et associé à des quatrièmes moyens (56) agencés dans lesdites unités électroniques pour fournir des quatrièmes données auxdits deuxièmes récepteurs ou lecteurs, notamment des codes d'identification des unités électroniques passant par ladite entrée.

11. Système selon l'une des revendications 5 à 10, caractérisé en ce qu'il est prévu en outre un troisième récepteur ou lecteur (58, 59) situé à ladite entrée, les régions de communication respectives desdits deuxième et troisième récepteurs ou lecteurs étant au moins partiellement séparées spatialement de manière à permettre de détecter le sens de passage des unités électroniques, c'est-à-dire soit une entrée, soit une sortie dudit espace délimité.

12. Système selon l'une des revendications 5 à 11, caractérisé en ce que ladite première plage de fréquence est située dans les basses fréquences, notamment de l'ordre d'une centaine de KHz, et en ce que ladite deuxième plage de fréquence est située dans les hautes fréquences, notamment de l'ordre des centaines de MHz et plus.

13. Système selon l'une des revendications 5 à 12, caractérisé en ce que ledit espace délimité est un wagon, un compartiment d'un véhicule routier ou tout autre espace de chargement d'un moyen de transport de personnes ou d'objets, ce système servant alors au contrôle des personnes ou objets occupant ledit espace lors d'un trajet ou d'une période donnée.

14. Unité électronique (16, 36) formant un récepteur-émetteur ou récepteur-répondeur, notamment sous la forme d'une carte, comprenant :
- des premiers moyens (18) pour recevoir des premières données dans une première plage de fréquence et susceptibles d'être en mode "écoute" en permanence ou en quasi-permanence, au moins durant des périodes de fonctionnement de cette unité.
- des deuxièmes moyens (20) pour fournir des deuxièmes données dans une deuxième plage de fréquence supérieure à ladite première plage de fréquence, ces deuxièmes moyens étant susceptibles d'être activés seulement durant un ou des premier(s) moment(s) limité(s) dont au moins le début dudit un ou de l'un de ces premier(s) moment(s) est déterminé par lesdites premières données.

15. Unité électronique selon la revendication 14, caractérisée en ce que ladite première plage de fréquence est située dans les basses fréquences, notamment de l'ordre d'une centaine de KHz, et en ce que ladite deuxième plage de fréquence est située dans les hautes fréquences, notamment de l'ordre des centaines de MHz et plus.

16. Unité électronique selon la revendication 14 ou 15, caractérisée en ce qu'elle comprend en outre une base de temps (26) permettant de compter ou de décompter un intervalle de temps donné par la réception d'un signal de retardement, d'un signal de réactivation ou de tout autre signal temporel, ladite unité électronique étant agencée pour activer lesdits deuxièmes moyens à la fin dudit intervalle de temps.

17. Unité électronique selon l'une des revendications 14 à 16, caractérisée en ce qu'elle comprend en outre des troisièmes moyens de réception (42) dans ladite deuxième plage de fréquence, ces troisièmes moyens étant susceptibles d'être activés seulement durant un ou des deuxième(s) moment(s) limité(s) intervenant après la réception desdites premières données.

18. Unité électronique selon la revendication 17, caractérisée en ce que lesdits deuxièmes et troisièmes moyens (20, 42) ont en commun une bobine (30) de réception-émission de signaux électromagnétiques.

19. Unité électronique selon l'une des revendications 14 à 18, caractérisée en ce qu'elle comprend des quatrièmes moyens d'émission (56) dans ladite première plage de fréquence, lesdits premiers et quatrièmes moyens (18, 56) ayant en commun une deuxième bobine (28) de réception-émission de signaux électromagnétiques.

20. Unité électronique selon l'une des revendications 14 à 19, caractérisée en ce qu'elle comprend une source d'alimentation ou accumulateur d'énergie (24) pour alimenter au moins lesdits premiers moyens (18) de manière à laisser en permanence ou quasi-permanence ces premiers moyens dans un mode "écoute", au moins durant lesdites périodes de fonctionnement.
